# EUROPÄISCHE PATENTANMELDUNG

(11) **EP 0 944 165 A2**
(43) Veröffentlichungstag der Anmeldung: **22.09.1999**
(21) Anmeldenummer: 99104280.5
(22) Anmeldetag: 03.03.1999
(51) Int. Cl.: H02P 6/16

(54) **Steuervorrichtung für einen elektromotorischen Stellantrieb, insbesondere zur Verwendung in einem Kraftfahrzeug**

(30) Priorität: 16.03.1998 DE 19811377
(71) Anmelder: SIEMENS AKTIENGESELLSCHAFT, 80333 München (DE)
(72) Erfinder: Gilly, Joachim, 97230 Estenfeld (DE); Johanning, Hans-Peter, 97299 Zell am Main (DE); Klingseis, Bernhard, Dipl.-Ing.(FH), 93047 Regensburg (DE); Koch, Achim , Dipl.-Ing., 93105 Tegernheim (DE)

(57) **Zusammenfassung**

Zur aufwandsarmen Positionserfassung eines von dem Stellantrieb bewegten Stellteils und Ansteuerung eines für den Antrieb vorgesehenen bürstenlosen Gleichstrommotors (M) wird dessen Kommutierungs-Steuer-Signalverlauf (U_{K1};U_{K2}) durch Teilung aus dem Impuls-Signalverlauf (U_{S}) eines zur Positionserfassung vorgesehenen Inkremental-Drehgebers mit hoher Auflösung und entsprechend hoher Pulszahl abgeleitet.

## Beschreibung

Die Erfindung bezieht sich auf eine Steuervorrichtung für einen elektromotorischen Stellantrieb, insbesondere zur Verwendung in einem Kraftfahrzeug, gemäß Patentanspruch 1.

Stellantriebe der vorgenannten Art können vorteilhaft zur motorischen Verstellung von Kraftfahrzeug-Fenstern bzw. Kraftfahrzeug-Schiebedächern oder zur Verstellung des Hubes bzw. der Öffnungs- bzw. Schließzeiten von Ventilen in Kraftfahrzeug-Verbrennungsmotoren eingesetzt werden. In jedem dieser Fälle ist eine genaue Erfassung der jeweils aktuellen Position des durch den Stellantrieb bewegten Stellteils notwendig. Die jeweilige Position wird üblicherweise durch Inkremental-Drehgeber derart ermittelt, daß die in zumindest einem statorseitigen Sensor durch ein rotorseitiges Polrad induzierten Pulse gezählt werden. Zur Gewährleistung einer hohen Genauigkeit der Jeweils ermittelten Stellposition ist eine entsprechende Auflösung notwendig, was ein entsprechend hochpoliges Polrad bzw. eine entsprechende Anzahl von zugeordneten, am Umfang über dem Polrad verteilten statorseitigen Sensoren bedingt.

Durch die DE 36 30 312 A1 ist eine Schaltungsanordnung zur elektronischen Kommutierung eines mehrsträngigen Gleichstrommotors bekannt, bei der die Kommutierungssignale zur Ansteuerung der Stränge durch einen mit Marken versehenen Rotor in einem Sensor derart erzeugt werden, daR die vom Sensor gelieferten Impulse einen Zähler weiterschalten, dessen Ausgänge Schalter ansteuern, welche die Stränge auf ein Betriebs- oder Bezugspotential schaffen, wobei der Zähler sich selbst nach einer bestimmten Anzahl von Impulsen zurücksetzt, die ein ganzzahliger Teil der Anzahl der Marken auf dem Rotor ist.

Gemäß Aufgabe vorliegender Erfindung soll der Aufwand für Stellantriebe der vorgenannten Art, insbesondere bei Speisung des Stellantrieb-Elektromotors aus dem Gleichspannungs-Bordnetz eines Kraftfahrzeuges, vereinfacht werden. Die Lösung dieser Aufgabe gelingt erfindungsgemäß durch einen Stellantrieb gemäß Patentanspruch 1; vorteilhafte Ausgestaltungen der Erfindung sind jeweils Gegenstand der Unteransprüche.

Gemäß der vorliegenden Erfindung wird als antreibender Elektromotor für den Stellantrieb ein bürstenloser Gleichstrommotor mit elektronischem Kommutator vorgesehen, dessen rotorstellungsabhängige Kommutierungs-Steuersignale für die Phasenbestromung der Statorwicklung aus der Pulsfolge des für die Positionsermittlung vorgesehenen Inkremental-Drehgebers, vorzugsweise durch einfache Herunterteilung, abgeleitet werden. Das zweckmäßigerweise motorseitig als Pulsgeber vorgesehene Polrad wird derart hochpolig ausgebildet, daß die für die geforderte Positionsgenauigkeit notwendige Auflösung gewährleistet ist. Zur Gewinnung der Kommutierungs-Steuersignale für die Bestromung der Statorwicklung wird dann der durch den Inkremental-Drehgeber zur Positonsermittlung gewonnene Originalimpulsstrom durch Hard- und/oder Softwaremittel in besonders einfacher Weise lediglich heruntergeteilt; dazu ist zweckmäßigerweise eine Polpaarzahl für das Polrad vorgesehen, die ganzzahlig teilbar durch die Polpaarzahl des bürstenlosen Gleichstrommotors ist. In vorteilhafter Weise sind insbesondere 24-polpaarige bzw. 36-polpaarige Polräder vorgesehen, deren Polpaarzahl durch sechs teilbar ist. Daraus sind auf einfache Weise Kommutierungs-Steuersignale für einen zweipoligen Gleichstrommotor durch ganzzahlige Herunterteilung durch zwölf und für einen vierpoligen Gleichstrommotor durch ganzzahlige Herunterteilung durch sechs ableitbar.

Die Kommutierungs-Ansteuerung der Ständerwicklung eines bürstenlosen Gleichstrommotors bei Speisung aus einem Gleichspannungsnetz ist z.B. aus dem Buch "Elektrische Kleinstmotoren und ihr Einsatz", expert-verlag/VDE-Verlag Gmb, 1979, Kapitel 9 bekannt.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: das Prinzip der Ansteuerung eines erfindungsgemäßen Stellantriebes durch Ableitung der Kommutierungssignale aus einem Inkremental-Drehgeber mit einem rotorseitigen magnetischen Polrad mit einer Polpaarzahl 2p = 36 und mit statorseitig zwei Sensoren;
- FIG 2: das Prinzip der Ansteuerung eines erfindungsgemäßen Stellantriebes durch Ableitung der Kommutierungssignale aus einem Inkremental-Drehgeber mit einem rotorseitigen magnetischen Polrad mit einer Polpaarzahl 2p = 24 und mit statorseitig drei Sensoren;
- FIG 3: den aus den Sensorsignalen des Inkremental-Drehgebers ableitbaren Impuls-Signalverlauf für die Positionsermittlung sowie die daraus durch Herunterteilen abgeleiteten Kommutierungs-Steuersignale für je einen Gleichstrommotor mit der Polpaarzahl 2p = 1 bzw. 2p = 2.

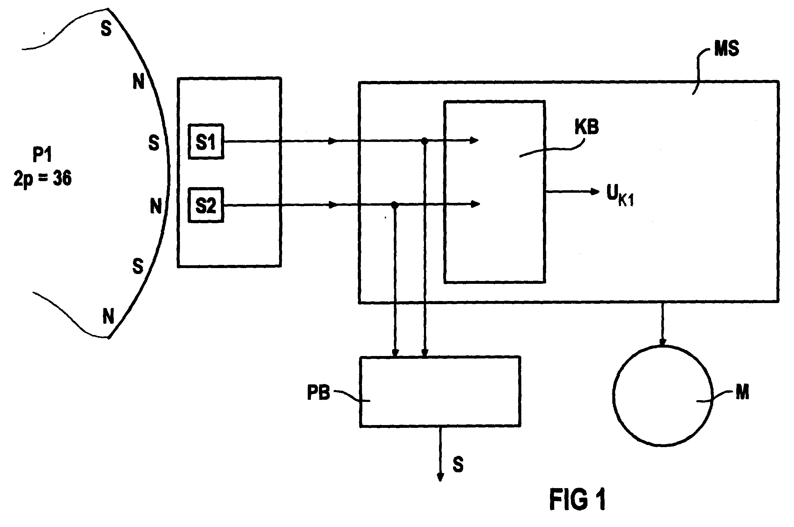

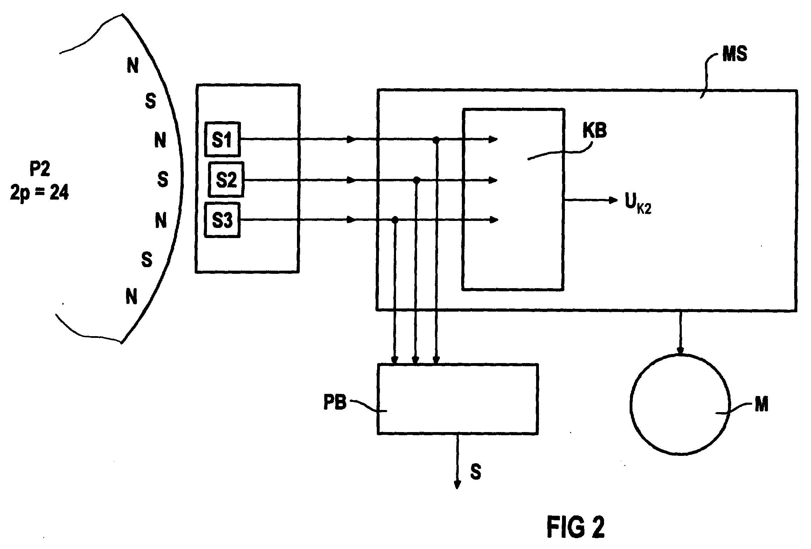

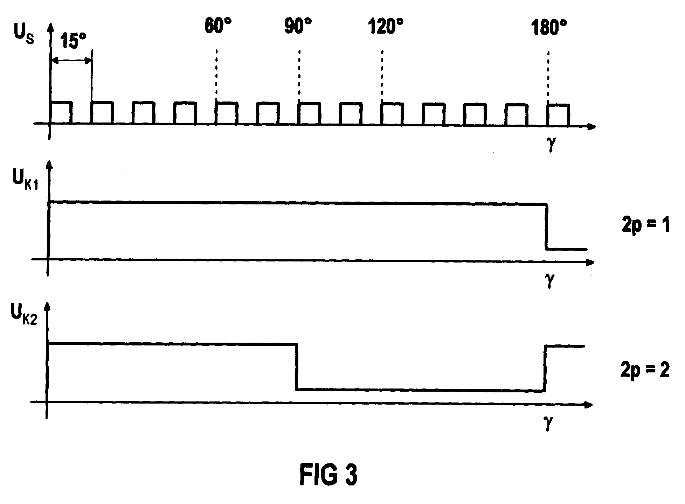

FIG 1, 2 zeigen in schematischer Darstellung zwei vorteilhafte Ausführungsbeispiele einer erfindungsgemäßen Motor-Steuervorrichtung MS für einen Stellantrieb mit einem bürstenlosen Gleichstrommotor M und einem von diesem bei Drehung angetriebenen magnetischen Polrad P1 mit einer Polpaarzahl 2p = 36 gemäß FIG 1 und einem magnetischen Polrad P2 mit einer Polpaarzahl 2p = 24 gemäß FIG 2. Gemäß FIG 1 sind dem Polrad P1 statorseitig am Umfang hintereinander versetzten zwei Sensoren S1 bzw.S2, z.B. in Form von je einem Hallwandler zugeordnet, derart daR sich eine 2,5°-Auflösung ergibt; gemäß FIG 2 sind dem Polrad P2 statorseitig drei hintereinander am Umfang versetzte Sensoren S1 bzw. S2 bzw. S3 zugeordnet, so daß sich unter Berücksichtigung der Polpaarzahl 2p = 24 und den nunmehr vorgesehenen drei Sensoren S1 bzw.S2 bzw.S3 wiederum eine 2,5°-Auflösung ergibt. Der daraus in einem Positionsbildner PB ableitbare Impuls-Signalverlauf U_{S} ist im oberen Teil von FIG 3 als Funktion des mechanischen Umfangwinkels γ des Polrades P1 bzw. P2 bzw. des Rotorumfangs des bürstenlosen Gleichstrommotors M dargestellt.

Durch inkrementale Addierung bzw. Zählung der Impulse kann auf den Drehwinkel des Polrades bzw. die Stellposition S eines von dem bürstenlosen Gleichstrommotor M angetriebenen, hier nicht näher dargestellten Stellteils, z.B. in Form eines Schiebedaches bzw. eines Fenster in einem Kraftfahrzeug, geschlossen werden.

Erfindungsgemäß wird aus der derart erfaßten Pulszahl des Impuls-Signalverlaufs U_{S} des Inkremental-Drehgebers durch Herunterteilung ein Kommutierungs-Steuersignalverlauf U_{K1} bzw. U_{K2} für einen zweipoligen Gleichstrommotor bzw. einen vierpoligen Gleichstrommotors auf einfache Weise abgeleitet. FIG 3 zeigt im mittleren Teil den Kommutierungs-Steuersignalverlauf U_{K1} für einen zweipoligen Motor in Abhängigkeit vom Umfangswinkel γ des Gleichstrommotors bzw. im unteren Teil den Kommutierungs-Steuersignalverlauf U_{K2} für einen vierpoligen Motor in Abhängigkeit vom Umfangswinkel γ.

Es dürfte ersichtlich sein, daß mit nur geringem Hardware- bzw. Softwareaufwand in einem Kommutierungs-Steuersignalbildner KB die entsprechenden Kommutierungs-Steuersignalverläufe U_{K1} bzw. U_{K2} durch einfaches, vorzugsweise ganzzahliges, Herunterteilen aus den mit Hilfe des hochpoligen magnetischen Polrades P1 bzw. P2 und der statorseitigen Sensoren S1 bzw. S2 bzw. S3 gebildeten Impuls-Signalverlauf U_{S} des Inkremental-Drehgebers ableitbar sind.

## Patentansprüche

1. Steuervorrichtung für einen Stellantrieb, insbesondere zur Verwendung in einem Kraftfahrzeug,
- mit einem Inkremental-Drehgeber mit einem Impuls-Signalverlauf (U_{S}) hoher Pulszahl zur Ermittlung der jeweiligen Stellposition (S) eines von dem Stellantrieb bewegten Stellteils;
- mit einem aus dem Impuls-Signalverlauf (U_{S}) des Inkremental-Drehgebers abgeleiteten Kommutierungs-Steuersignalverlauf (U_{K1};U_{K2}) für die Bestromung der Statorwicklung eines zum Antrieb des Stellteils vorgesehenen bürstenlosen Gleichstrommotors.

2. Stellantrieb nach Anspruch 1
- mit einer Pulszahl des Inkremental-Drehgebers, die ganzzahlig durch die Polzahl (p) des Gleichstrommotors (M) teilbar ist.

3. Stellantrieb nach Anspruch 1 und/oder 2
- mit einer Bildung der Pulszahl des Kommutierungs-Steuersignalverlaufs (U_{K1};U_{K2}) durch, insbesondere ganzzahlige, Teilung der Pulszahl des Inkremental-Drehgebers.

4. Stellantrieb nach zumindest einem der Ansprüche 1-3
- mit einer Bildung der Pulszahl des Inkremental-Drehgebers mittels eines rotorseitigen Polrades (P1;P2) und zumindest eines statorseitigen zugeordneten Sensors (S1;S2;S3).

5. Stellantrieb nach Anspruch 4
- mit einem Sensor (S1;S2;S3) in Form eines Hallelementes.

6. Stellantrieb nach Anspruch 4
- mit einem rotorseitigen Polrad (P1 bzw.P2), dessen Polpaarzahl (2p) durch sechs teilbar ist.

7. Stellantrieb nach zumindest einem der Ansprüche 4-6
- mit einem 36-polpaarigen rotorseitigen Polrad (P1) und zwei am Umfang hintereinander versetzten Sensoren (S1;S2) zur Bildung einer Pulszahl im Sinne einer 2,5°-Auflösung.

8. Stellantrieb nach zumindest einem der Ansprüche 4-6
- mit einem 24-polpaarigen rotorseitigen Polrad (P2) und drei am Umfang hintereinander versetzten Sensoren (S1;S2;S3) zur Bildung einer Pulszahl im Sinne einer 2,5°-Auflösung.
